# EUROPÄISCHE PATENTSCHRIFT

(11) **EP 2 138 546 B1**
(45) Veröffentlichungstag und Bekanntmachung des Hinweises auf die Patenterteilung: **29.05.2013**
(21) Anmeldenummer: 09075121.5
(22) Anmeldetag: 13.03.2009
(51) Int. Cl.: C09C 1/00, B05D 7/08, C09D 7/12, C08K 9/06, C08K 3/22, C08K 3/36, B05D 3/06

(54) **Verfahren zur Herstellung von verschleissfesten, kratzfesten Oberflächen**
Method for producing wear-resistant, scratch-resistant surfaces
Procédé de fabrication de surfaces résistant à l'usure et aux égratignures

(30) Priorität: 24.06.2008 DE 102008029723
(43) Veröffentlichungstag der Anmeldung: 30.12.2009
(73) Patentinhaber: Flooring Technologies Ltd., Pieta PTA 9044 (MT)
(72) Erfinder:
(74) Vertreter: Gross, Felix

(56) Entgegenhaltungen:
- EP-A1- 1 728 834
- WO-A1-2006/044376
- WO-A1-2007/046357
- US-A- 4 564 556
- US-A- 4 764 497
- US-A1- 2006 052 232

## Beschreibung

Die Erfindung betrifft ein Verfahren zur Herstellung von kratzfesten Oberflächen nach Anspruch 1 und einen Zusatz für einen Lack oder ein Kunstharz nach Anspruch 11.

Kratzfeste, verschleißfeste Oberflächen werden in vielen Bereichen bei der Verarbeitung von Holzwerkstoffplatten wie Sperrholz-, Span-, OSB-, HDF- oder MDF-Platten zu Fußböden, Wandpanelen, Arbeitsflächen, Möbelplatten gewünscht. Die Holzwerkstoffplatten besitzen dekorative Oberflächen, die durch Aufbringen von Verschleißschutz-Schichten geschützt werden. Als Verschleißschutzschichten werden durch UV- oder Elektronenstrahlen aushärtende Lacke wie Acrylharz-, Epoxidharz- oder Melaminharze verwendet.

Neben Holzwerkstoffen, ist es aber auch wünschenswert, Holz, z.B. für Parkette und Bodenbeläge mit kratzfesten Oberflächen zu versehen.

Zur Verbesserung der Eigenschaften hinsichtlich Verschleißfestigkeit können in diese Harzschichten geeignete Partikel im Größenbereich von 50 nm bis 150 µm eingelagert werden. Dabei wird durch größere Partikel der Abriebwiderstand und durch kleinere Partikel die Kratzfestigkeit verbessert. Als Partikel mit kleinem Durchmesser werden Nanopartikel aus Siliziumcarbid, Siliziumdioxid und α-Aluminiumoxid oder Diamant eingesetzt.

Trotz der Zusätze treten bei der Verwendung Abnutzungs- aber auch Verschmutzungsprobleme auf, die grundsätzlich den Nutzen solcher Zusätze nicht in Frage stellen, aber beim Verbraucher einen negativen Eindruck hinterlassen. Dieser Eindruck tritt insbesondere bei solchen Produkten auf, die einen hohen Glanzgrad in Bereichen von 80 bis 100 Glanzpunkten besitzen. Als Prüfmethode wird für die Glanzgradmessung die EN ISO 2813 (Messgeometrie 20 und 60°) eingesetzt.

Bei der Verschleißbeanspruchung, hier konkret der Kratzbeanspruchung muss zwischen zwei unterschiedlichen Beanspruchungsarten unterschieden werden. Zum einen handelt es sich um eine massive Ritzbeanspruchung durch z.B. einen scharfen Metallgegenstand oder einen Stein. Zum anderen handelt es sich um eine schleifende Beanspruchung, wie sie durch feinen Sand an den Schuhen auftritt. Um eine glänzende Lackoberfläche als Bodenbelag möglichst lange ansehnlich zu halten, muss sie sowohl eine gute Makrokratzfestigkeit als auch eine gute Mikrokratzfestigkeit besitzen.

Zur Verbesserung der Kratzfestigkeit, insbesondere der Mikrokratzfestigkeit der Oberflächen von Holzwerkstoffplatten ist es bekannt, in die oberste oder obersten Lackschichten mit denen die Holzwerkstoffplatten versiegelt werden Siliziumdioxid- oder Aluminiumoxid-partikel im Nanogrößenbereich einzulagern. Die Makrokratzfestigkeit wird in der/den Lackschicht/en insbesondere durch Verwendung von Lacken erreicht, die sich durch Härtung mit energiereicher Strahlung stark vernetzen lassen, beispielsweise Elektronen-/UV-Strahlung.

Die erreichten Ergebnisse hinsichtlich der Kratzfestigkeit werden entweder in Newton ausgedrückt, wobei dabei die Prüfung nach der DIN EN 438 Tl. 2.Abschnitt oder in der Abnahme des Glanzgrades bzw. der Visuellen Begutachtung im Hinblick auf Kratzer nach dem sogenannten Martindale-Test (DIN EN ISO 12947:04/1999 bzw. IHD W-445, Version Mai 2007) erfolgt. Der Stand der Technik im Hinblick auf die Verbesserung der Mikrokratzfestigkeit benennt heute den Einsatz von Nanopartikeln aus Siliziumdioxid in Lacken. Dieser bringt generell bessere Ergebnisse gegenüber Lacken ohne zusätzliche Nanopartikel. In vielen Anwendungsfällen sind aber die Beanspruchungen so hoch, dass der gewünschte hohe Glanzgrad schnell bei einem Einsatz der Endprodukte z. B. im Fußbodenbereich verloren geht.

Aus der WO 2007/046357 A1 (EP 1 947 155 A1) ist eine Zusammensetzung enthaltend Partikel aus Ti02, SnO2 und SiO2 bekannt, die zusätzlich mit SiO2 und ZrO2 ummantelt sein können. Die Oberfläche dieser ummantelten Partikel kann zusätzlich mit organischen Silanen modifiziert sein. Diese Zusammenset zung wird zur Beschichtung von plastischen Linsenmaterialen verwendet.

Der Erfindung liegt die Aufgabe zugrunde, ein Verfahren zu entwickeln, mit dem Holz oder Holzwerkstoffplatten wie Sperrholz-, Span-, OSB-, HDF- oder MDF-Platten mit einem lang anhaltenden hohen Glanzgrad bzw. einer hohen Kratzfestigkeit erhalten werden.

Erfindungsgemäß wird die Aufgabe durch die kennzeichnenden Merkmale des Anspruches 1 gelöst.

Entsprechend ist das Verfahren zur Herstellung von verschleißfesten, kratzfesten Oberflächen auf Holzwerkstoffplatten, wie Sperrholz-, Span-, OSB-, MDF- oder HDF-Platten oder auf Holz, insbesondere für Parkett oder Fussbodenbeläge, dadurch gekennzeichnet, dass die verschleißfesten Oberflächen aus mehreren Schichten eines durch UV- oder Elektronenstrahlen vernetzbaren Lackes oder Kunstharzes mit Nanopartikelzusätzen aus Gemischen von Zirconiumdioxid und Siliziumdioxid, die Mengen von 10 bis 80 Gew.% Zirconiumdioxid bei mittleren Korngrößen von 5 bis 30 nm enthalten, vor der Einarbeitung in den Lack mit einem Silan bei Temperaturen von 20 bis 70°C über einen Zeitraum von 60 bis 180 Minuten vorbehandelt werden und in Mengen von 5 bis 30 Gew.% dem Lacke oder Kunstharz zugesetzt werden.

Die längere Beibehaltung eines hohen Glanzgrades bei hoher Beanspruchung durch eine Verbesserung der Mikrokratzfestigkeit durch die Zugabe eines Gemisches von Partikeln in Nanobereich von Zirconiumdioxid und Siliziumdioxid in der/den obersten Lackschicht/en oder Schichten des Kunstharzes erreicht. Die Nanopartikel von Zirconiumdioxid werden in Mengen von 10 bis 80 Gew.% Zirconiumdioxid im Oxidgemisch zugefügt. Bevorzugte Mengenbereiche an Zirconiumdioxid liegen bei 40 bis 70 Gew.% und insbesondere bei 50 bis 65 Gew.%.

Das Gemisch von Zirconiumdioxid/Siliziumdioxid wird in Mengen von 5 bis 30 Gew.%, vorzugsweise 10 bis 25 Gew.% und insbesondere von 15 bis 22 Gew.% den verwendeten Lacken oder Kunstharzen zugegeben.

Die mittlere Partikelgröße (Korngröße) liegt im Bereich von 5 bis 30 nm, vorzugsweise 10 bis 25 nm und insbesondere 11 bis 20 nm, wobei die Partikel mit den kleinsten Abmessungen den obersten Lackschichten zugegeben werden können. Besonders gute Eigenschaften hinsichtlich der Mikrokratzfestigkeit werden erreicht, wenn der Lack für die Verschleißschutzschicht in mehreren Schritten mit einer teilweisen Aushärtung der gerade aufgetragenen Schicht erfolgt.

Gemäß dem vorliegenden Verfahren werden die Lack- oder Kunstharzschichten getrocknet oder mindestens teilweise ausgehärtet.

Das Ergebnis hinsichtlich der Mikrokratzfestigkeit kann auch durch die Variation der Zugabemenge des Partikelgemisches in den einzelnen aufzutragenden Schichten beeinflusst werden

Zur Verbesserung der Einbettung bzw. Verankerung der dem Lack zugegebenen Nanopartikel des Zirconiumdioxid/Siliziumdioxid-Gemisches können diese in einer besonderen Ausgestaltung der Erfindung mit einem Silan vorbehandelt werden. Als Silane sind Siloxane wie z.B. Trimethylsiloxane verwendbar. Besonders geeignet ist Methacryloxypropyl-trimethylsiloxan bzw. Acryloxypropyltrimethylsiloxan.

In einer Variante des vorliegenden Verfahrens wird das bei der Vorbehandlung eingesetzte Silan mittels einer Säure hydrolysiert.

Das im Verfahren verwendete Kunstharz ist bevorzugt ein Melaminharz, ein Harnstoffharz, ein Phenolharz, ein Epoxidharz oder Gemisch von mindestens zwei dieser Harze.

Ebenfalls ist es möglich, zusätzlich Acrylate mit bis zu 5 Gew% einzusetzen.

Die mit den eingesetzten Oxidgemischen gemäß den Ausführungsbeispielen erhaltenen Lackoberflächen (oder ggf. Kunstharzoberflächen) zeigen auch bei starker scheuernder Belastung z.B. nach dem Martindale-Test kaum eine Abnahme der hohen Glanzpunkte und eignen sich hervorragend z.B. für Fußbodenbeläge mit starker Begehung. Die Änderung des Glanzgrades als Messwert für die Kratzfestigkeit bei der oben genannten Methode, die mit den erfindungsgemäßen Mischungen erhalten werden, liegen bei max. 5 Glanzpunkten bei einer Messgeometrie von 85°.

Eine nähere Erläuterung der Prüfmethode nach Martindale soll anhand von Beispielen durchgeführt werden. Die Prüfmethode, die insbesondere für die Prüfung von Lackoberflächen eingesetzt wird, wird auch als Scheuertest bezeichnet ( DIN EN ISO 12947, Teil 1). Danach werden nach Verfahren A (Prüfmittel SB 7447, Anpressdruck 6N, Lissajous-Bewegung 5LB) eine Glanzgradänderung gegenüber der Ausgangsoberfläche nach einer scheuernden Belastung durch ein Scotch-Brite-Pad geprüft. Die erhaltenen Ergebnisse werden in den Beispielen genannt.

Die Erfindung soll nachfolgend anhand eines Ausführungsbeispieles näher erläutert werden.

Auf eine MDF-Holzfaserplatte wurde in bekannter Weise eine Dekorfolie aus Kunstharz aufgebracht und ausgehärtet. Auf die so vorbereitete MDF-Holzfaserplatte wurde dann die erfindungsgemäße Verschleißschutzschicht aufgetragen. Dazu wurden nacheinander drei Schichten eines UV-aushärtbaren Acrylharzlackes in Mengen von 80 g/m² in der ersten und zweiten Schicht und 30 g/m², aufgetragen. Dabei enthält der Lack für die dritte Schicht ca. 20 Gew.% Nanopartikel. Das eingesetzte erfindungsgemäße Zirconiumdioxid/Siliziumdioxid-Gemisch war eine 60:40 Mischung. Der Glanzgrad der mit der erfindungsgemäßen Mischung erhalten wurde, lag bei einer Messgeometrie von 60° bei 89,5 Glanzpunkten.

Zur Prüfung der Kratzfestigkeit im Vergleich mit bekannten Verschleißschutzschichten auf Holzfaserplatten wurden die Oberflächen dem Scheuertest nach dem EN ISO 12947, Teil 1 unterzogen.

Es ergaben sich die nachfolgenden Werte. Bekannte Lackoberflächen mit Siliziumdioxid-Nanopartikeln besaßen vor dem Scheuertest einen Glanzgrad von 90,5 Glanzpunkten und 50,7 Glanzpunkten nach der scheuernden Belastung. Die Lackoberfläche nach Beispiel 1 zeigte vor der scheuernden Belastung einen Glanzgrad von 89,5 Glanzpunkten und nach der scheuernden Belastung von 86,5 Glanzpunkten (Messgeometrie jeweils 60°). Auf die Angabe von Messwerten bei einer Messgeometrie von 20° wird verzichtet.

In einer besonderen Ausgestaltung der Erfindung werden die Nanopartikel vor dem Auftragen der Lacke mit einem Silan vorbehandelt. Dazu werden die Oxidgemische zunächst in Trimethyltriacrylat suspendiert und die Suspension 15 min gerührt. Anschließend werden zu dieser Dispersion 50 Gew.%, bezogen auf die eingesetzte Oxidgemischmenge, Methacryloxypropyltrimethoxysilan zugegeben. Zu der so erhaltenen Dispersion werden 0,1 mol Salzsäure gegeben und die Dipersion nochmals 120 min gerührt, wobei die Temperatur bei maximal 70°C gehalten wird.

Durch diese Vorbehandlung ließen sich die Nanopartikel besonders gut in die Lackschichten einarbeiten und verankern.

## Patentansprüche

1. Verfahren zur Herstellung von verschleißfesten, kratzfesten Oberflächen auf Holzwerkstoffplatten, wie Sperrholz-, Span-, OSB-, MDF- oder HDF-Platten oder auf Holz, insbesondere für Parkett oder Fussbodenbeläge,
**dadurch gekennzeichnet,**
**dass** die verschleißfesten Oberflächen aus mehreren Schichten eines durch UV- oder Elektronenstrahlen vernetzbaren Lackes oder Kunstharzes mit Nanopartikelzusätzen aus Gemischen von Zirconiumdioxid und Siliziumdioxid, die Mengen von 10 bis 80 Gew.% Zirconiumdioxid bei mittleren Korngrößen von 5 bis 30 nm enthalten, vor der Einarbeitung in den Lack mit einem Silan bei Temperaturen von 20 bis 70°C über einen Zeitraum von 60 bis 180 Minuten vorbehandelt werden und in Mengen von 5 bis 30 Gew.% dem Lacke oder Kunstharz zugesetzt werden.

2. Verfahren nach Anspruch 1, **dadurch gekennzeichnet, dass** die mittleren Korngrößen des Zirconiumdioxids im Bereich von 10 bis 25 nm liegen.

3. Verfahren nach Anspruch 2, **dadurch gekennzeichnet, dass** die mittleren Korngrößen des Zirconiumdioxids im Bereich von 11 bis 20 nm liegen.

4. Verfahren nach einem der vorhergehenden Ansprüche, **dadurch gekennzeichnet, dass** die Nanopartikelzusätze in Mengen von 10 bis 25 Gew.% dem Lack oder Kunstharz zugesetzt werden.

5. Verfahren nach Anspruch 4, **dadurch gekennzeichnet, dass** die Nanopartikelzusätze in Mengen von 15 bis 22 Gew.% dem Lack oder Kunstharz zugesetzt werden.

6. Verfahren nach mindestens einem der vorhergehenden Ansprüche, **dadurch gekennzeichnet, dass** Lack- oder Kunstharzschichten getrocknet oder mindestens teilweise ausgehärtet werden.

7. Verfahren nach mindestens einem der vorhergehenden Ansprüche, **dadurch gekennzeichnet, dass** das Auftragen der nächsten Lackschicht oder der nächsten Kunstharzschicht nach dem teilweisen Aushärten der vorher aufgetragenen Schicht erfolgt.

8. Verfahren nach mindestens einem der vorhergehenden Ansprüche, **dadurch gekennzeichnet, dass** als Silan Siloxane eingesetzt werden.

9. Verfahren nach Anspruch 8, **dadurch gekennzeichnet, dass** als Silan Trimethylsiloxane eingesetzt werden.

10. Verfahren nach Anspruch 9, **dadurch gekennzeichnet, dass** als Silan Acryloxypropyltrimethylsiloxan eingesetzt wird.

11. Verfahren nach mindestens einem der vorhergehenden Ansprüche, **dadurch gekennzeichnet, dass** das bei der Vorbehandlung eingesetzte Silan mittels einer Säure hydrolysiert wird.

12. Verfahren nach mindestens einem der vorhergehenden Ansprüche, **dadurch gekennzeichnet, dass** als Kunstharz ein Melaminharz, ein Harnstoffharz, ein Phenolharz, ein Epoxidharz oder Gemisch von mindestens zwei dieser Harze verwendet wird.

13. Verfahren nach Anspruch 11, **gekennzeichnet durch** den zusätzlichen Einsatz von Acrylaten mit bis zu 5 Gew%.

## Claims

1. Method for producing wear-resistant, scratch-resistant surfaces on wood-based material panels, such as plywood, chipboard, OSB, MDF or HDF panels, or on wood, more particularly for parquet or floor coverings,
**characterized**
**in that** the wear-resistant surfaces consist of a plurality of coats of a varnish or synthetic resin which is crosslinkable by UV rays or electron beams and has nanoparticle additions comprising mixtures of zirconium dioxide and silicon dioxide, which comprise amounts of 10 to 80 wt% of zirconium dioxide for average particle sizes of 5 to 30 nm and which prior to incorporation into the varnish are pretreated with a silane at temperatures from 20 to 70°C over a period from 60 to 180 minutes and are added to the varnish or synthetic resin in amounts of 5 to 30 wt%.

2. Method according to Claim 1, **characterized in that** the average particle sizes of the zirconium dioxide are in the range from 10 to 25 nm.

3. Method according to Claim 2, **characterized in that** the average particle sizes of the zirconium dioxide are in the range from 11 to 20 nm.

4. Method according to any of the preceding claims, **characterized in that** the nanoparticle additions are added to the varnish or synthetic resin in amounts from 10 to 25 wt%.

5. Method according to Claim 4, **characterized in that** the nanoparticle additions are added to the varnish or synthetic resin in amounts from 15 to 22 wt%.

6. Method according to at least one of the preceding claims, **characterized in that** varnish or synthetic resin coats are dried or at least partly cured.

7. Method according to at least one of the preceding claims, **characterized in that** the application of the next varnish coat or of the next synthetic resin coat takes place after the partial curing of the coat applied previously.

8. Method according to at least one of the preceding claims, **characterized in that** siloxanes are used as silane.

9. Method according to Claim 8, **characterized in that** trimethylsiloxanes are used as silane.

10. Method according to Claim 9, **characterized in that** acryloyloxypropyltrimethylsiloxane is used as silane.

11. Method according to at least one of the preceding claims, **characterized in that** the silane used for the pretreatment is hydrolysed by means of an acid.

12. Method according to at least one of the preceding claims, **characterized in that** a melamine resin, a urea resin, a phenolic resin, an epoxy resin or mixture of at least two of these resins is used as synthetic resin.

13. Method according to Claim 11, **characterized by** the additional use of acrylates at up to 5 wt%.

## Revendications

1. Procédé de réalisation de surfaces résistant à l'usure et aux rayures sur des plaques à base de bois, par exemple des plaques du contreplaque, de copeaux, d'OSB, de MDF ou de HDF, ou sur du bois, en particulier pour parquets ou recouvrements de planchers,
**caractérisé en ce que**
les surfaces résistant à l'usure sont constituées de plusieurs couches d'un vernis ou d'une résine synthétique aptes à réticuler sous l'action d'un rayonnement UV ou d'électrons, contenant des additifs en nanoparticules de mélanges de dioxyde de zirconium et de dioxyde de silicium, qui contiennent de 10 à 80 % en poids de dioxyde de zirconium d'une granulométrie moyenne de 5 à 30 nm et qui sont prétraités avant incorporation dans le vernis avec un silane pendant une durée de 60 à 180 minutes et à une température de 20 à 70°C et sont ajoutés au vernis ou à la résine synthétique à raison de 5 à 30 % en poids.

2. Procédé selon la revendication 1, **caractérisé en ce que** la granulométrie moyenne du dioxyde de zirconium est comprise entre 10 et 25 nm.

3. Procédé selon la revendication 2, **caractérisé en ce que** la granulométrie moyenne du dioxyde de zirconium est comprise entre 11 et 20 nm.

4. Procédé selon l'une des revendications précédentes, **caractérisé en ce que** les additifs en nanoparticules sont ajoutés au vernis ou à la résine synthétique à raison de 10 à 25 % en poids.

5. Procédé selon la revendication 4, **caractérisé en ce que** les additifs en nanoparticules sont ajoutés au vernis ou à la résine synthétique à raison de 15 à 22 % en poids.

6. Procédé selon au moins l'une des revendications précédentes, **caractérisé en ce que** les couches de vernis ou de résine synthétique sont séchées ou au moins partiellement durcies.

7. Procédé selon au moins l'une des revendications précédentes, **caractérisé en ce que** l'application de la couche de vernis ou de la couche de résine synthétique suivante s'effectue après durcissement partiel de la couche appliquée précédemment.

8. Procédé selon au moins l'une des revendications précédentes, **caractérisé en ce que** comme silane, il utilise des siloxanes.

9. Procédé selon la revendication 8, **caractérisé en ce que** comme silane, il utilise du triméthylsiloxane.

10. Procédé selon la revendication 9, **caractérisé en ce que** comme silane, il utilise l'acryloxypropyltriméthylsiloxane.

11. Procédé selon au moins l'une des revendications précédentes, **caractérisé en ce que** lors du prétraitement, le silane utilisé est hydrolysé au moyen d'un acide.

12. Procédé selon au moins l'une des revendications précédentes, **caractérisé en ce que** comme résine synthétique, il utilise une résine de mélamine, une résine d'urée, une résine phénolique, une résine époxy ou un mélange d'au moins deux de ces résines.

13. Procédé selon la revendication 11, **caractérisé par** l'utilisation supplémentaire d'acrylates à raison de jusque 5 % en poids.
